# EUROPÄISCHE PATENTANMELDUNG

(11) **EP 4 246 335 A2**
(43) Veröffentlichungstag der Anmeldung: **20.09.2023**
(21) Anmeldenummer: 23184649.4
(22) Anmeldetag: 22.05.2019
(51) Int. Cl.: G06F 12/14

(54) **KRYPTOGRAFIEMODUL UND BETRIEBSVERFAHREN HIERFÜR**

(30) Priorität: 20.06.2018 DE 102018209965; 13.07.2018 DE 102018211752; 13.08.2018 DE 102018213618
(62) Teilanmeldung aus: 19727325.3
(71) Anmelder: Robert Bosch GmbH, 70442 Stuttgart (DE)
(72) Erfinder: Lenz, Christoph, 71577 Grosserlach (DE); Meurer, Alexander, 44791 Bochum (DE); Schramm, Juergen, 74321 Bietigheim-Bissingen (DE); Sagar, Ilias, 71229 Leonberg (DE); Jung, Ramona, 70499 Stuttgart (DE); Ziegler, Florian, 70378 Stuttgart (DE); Weber, Andreas, 71287 Weissach (DE); Stumpf, Frederic, 71229 Leonberg (DE)

(57) **Zusammenfassung**

Kryptografiemodul, insbesondere für eine Recheneinrichtung, wobei das Kryptografiemodul dazu ausgebildet ist, wenigstens einen Speicherbereich einer Speichereinrichtung, auf die die Recheneinrichtung zugreifen kann, zu überprüfen, wodurch ein Ergebnis der Überprüfung erhalten wird, und das Ergebnis zumindest zeitweise zu speichern.

## Beschreibung

### Stand der Technik

Die Offenbarung betrifft ein Kryptografiemodul. Die Offenbarung betrifft ferner ein Betriebsverfahren für ein derartiges Kryptografiemodul.

Aus der DE 10 2009 046436 A1 ist ein kryptografisches Hardwaremodul bekannt.

### Offenbarung der Erfindung

Es ist Aufgabe der vorliegenden Erfindung, ein Kryptografiemodul mit gesteigertem Gebrauchsnutzen anzugeben.

Diese Aufgabe wird bei dem Kryptografiemodul der eingangs genannten Art dadurch gelöst, dass das Kryptografiemodul dazu ausgebildet ist, wenigstens einen Speicherbereich einer Speichereinrichtung, auf die die Recheneinrichtung zugreifen kann, zu überprüfen, wodurch ein Ergebnis der Überprüfung erhalten wird, und das Ergebnis zumindest zeitweise zu speichern. Dadurch ist vorteilhaft die Möglichkeit gegeben, einen Inhalt des wenigstens einen Speicherbereichs beispielsweise auf Abweichungen gegenüber einem vorgebbaren Inhalt hin zu überprüfen. Hierdurch kann vorteilhaft beispielsweise die Ausführung von unsicheren bzw. durch einen Angreifer kompromittierten Computerprogrammen durch die Recheneinrichtung verhindert werden.

Bei bevorzugten Ausführungsformen kann die Speichereinrichtung extern zu dem Kryptografiemodul und der Recheneinrichtung angeordnet sein. Bei weiteren bevorzugten Ausführungsformen kann die Speichereinrichtung jedoch auch in die Recheneinrichtung integriert sein. Bei noch weiteren bevorzugten Ausführungsformen kann vorteilhaft auch ein Ein-chip-System (englisch: system-on-a-chip, SoC) vorgesehen sein, das die Recheneinrichtung, die Speichereinrichtung und wenigstens ein Kryptografiemodul gemäß den Ausführungsformen aufweist. In diesem Fall sind die Recheneinrichtung, die Speichereinrichtung und das wenigstens eine Kryptografiemodul z.B. auf einem gemeinsamen Halbleitersubstrat angeordnet, wodurch sich eine besonders klein bauende Konfiguration ergibt.

Bei weiteren bevorzugten Ausführungsformen kann die Recheneinrichtung wenigstens einen Rechenkern aufweisen und/oder einen Mikroprozessor und/oder einen Mikrocontroller und/oder einen digitalen Signalprozessor (DSP) und/oder einen programmierbaren Logikbaustein (z.B. einen FPGA) oder dergleichen.

Bei weiteren bevorzugten Ausführungsformen ist vorgesehen, dass das Kryptografiemodul dazu ausgebildet ist, mehrere Speicherbereiche der Speichereinrichtung bzw. mehrere in der Speichereinrichtung gespeicherte Computerprogramme zu überprüfen, wobei insbesondere das Kryptografiemodul die mehreren Speicherbereiche der Speichereinrichtung bzw. die mehreren Computerprogramme periodisch überprüft. Dadurch können vorteilhaft mehrere Speicherbereiche bzw. in den Speicherbereichen gespeicherte Computerprogramme z.B. für die Recheneinrichtung überprüft werden, wobei durch die periodische Überprüfung eine weiter gesteigerte Sicherheit gegen Manipulationen und/oder zufällig eintretende Veränderung des Inhalts des bzw. der Speicherbereiche gegeben ist. Es versteht sich, dass unter Anwendung des Prinzips gemäß den Ausführungsformen auch Daten (z.B. im Gegensatz zu durch die Recheneinrichtung ausführbaren Computerprogrammen) auf Integrität bzw. Übereinstimmung mit vorgebbaren Referenzdaten geprüft werden können. Bei weiteren Ausführungsformen ist auch denkbar, sowohl Daten als auch Computerprogramme zu überprüfen, die z.B. jeweils einem entsprechenden Speicherbereich bzw. demselben Speicherbereich der Speichereinrichtung zugeordnet sein können.

Bei weiteren bevorzugten Ausführungsformen ist vorgesehen, dass das Kryptografiemodul dazu ausgebildet ist, a) den wenigstens einen Speicherbereich zu wenigstens einem zufällig oder pseudozufällig gewählten Zeitpunkt zu überprüfen, und/oder b) die mehreren Speicherbereiche zumindest zeitweise in einer zufälligen oder pseudozufälligen Reihenfolge zu überprüfen. D.h., bei weiteren Ausführungsformen kann während einer ersten Betriebsphase z.B. eine zufällige oder pseudozufällige Reihenfolge für die Überprüfung verwendet werden, und während einer zweiten Betriebsphase kann auch eine andersartige als die für die erste Betriebsphase genannte zufällige oder pseudozufällige Reihenfolge gewählt werden.

Bei weiteren bevorzugten Ausführungsformen ist vorgesehen, dass das Kryptografiemodul dazu ausgebildet ist, das Ergebnis der Überprüfung zumindest zeitweise flüchtig und/oder nichtflüchtig (z.B. in einem Flash-EEPROM Speicher) zu speichern.

Bei weiteren bevorzugten Ausführungsformen ist vorgesehen, dass das Ergebnis der Überprüfung eines Speicherbereichs wenigstens einen Wahrheitswert umfasst, der das Ergebnis der Überprüfung charakterisiert, z.B. bei negativer Überprüfung (also z.B. bei Manipulation der betrachteten Daten des überprüften Speicherbereichs) den Wert "TRUE" ("wahr").

Bei weiteren bevorzugten Ausführungsformen ist vorgesehen, dass mehrere von jeweilig überprüften Speicherbereichen der Speichereinrichtung als Ergebnis zugeordnete Wahrheitswerte einer ODER-Verknüpfung unterzogen werden, um ein Gesamtergebnis zu ermitteln, wobei insbesondere das Gesamtergebnis charakterisiert, ob wenigstens ein Ergebnis der mehreren überprüften Speicherbereiche der Speichereinrichtung negativ ist.

Bei weiteren bevorzugten Ausführungsformen ist vorgesehen, dass das Kryptografiemodul dazu ausgebildet ist, das Gesamtergebnis zumindest zeitweise flüchtig und/oder nichtflüchtig zu speichern.

Bei weiteren bevorzugten Ausführungsformen ist vorgesehen, dass das Kryptografiemodul dazu ausgebildet ist, die Überprüfung des wenigstens einen Speicherbereichs unter Verwendung eines schlüsselbasierten Nachrichtenauthentifizierungscodes, CMAC, auszuführen. Dadurch ist eine besonders effiziente Überprüfung ermöglicht. Eine Internetpublikation, die sich auf eine beispielhafte Ausgestaltung des CMAC-Verfahrens bezieht, ist beispielsweise unter https://doi.org/10.6028%2Fnist.sp.800-38b abrufbar.

Bei weiteren bevorzugten Ausführungsformen ist vorgesehen, dass das Kryptografiemodul eine, vorzugsweise in das Kryptografiemodul integrierte, Speichereinheit zur Speicherung wenigstens eines Referenzwerts und/oder eines Referenzlayouts für den wenigstens einen Speicherbereich aufweist. Bei bevorzugten Ausführungsformen kann der Referenzwert beispielsweise einen CMAC-Wert für einen vorgebbaren Speicherinhalt repräsentieren, der beispielsweise mit einem CMAC-Wert vergleichbar ist, der bei der Überprüfung des wenigstens einen Speicherbereichs durch das Kryptografiemodul ermittelt worden ist. Sofern der ermittelte CMAC-Wert von dem Referenzwert abweicht, kann auf eine unzulässige Veränderung des Speicherinhalts des überprüften Speicherbereichs geschlossen werden.

Bei weiteren bevorzugten Ausführungsformen ist vorgesehen, dass das Kryptografiemodul dazu ausgebildet ist, die Überprüfung in Abhängigkeit des Referenzwerts auszuführen. Bei diesen Ausführungsformen umfasst die Überprüfung beispielsweise die Bildung eines CMAC-Werts in Abhängigkeit des Speicherinhalts des wenigstens einen Speicherbereichs und einen Vergleich des so gebildeten CMAC-Werts mit dem Referenzwert, wie er beispielsweise in der Speichereinheit des Kryptografiemoduls hinterlegt ist.

Bei weiteren bevorzugten Ausführungsformen ist vorgesehen, dass das Kryptografiemodul dazu ausgebildet ist, eine Fehlerreaktion einzuleiten, wenn wenigstens ein Ergebnis und/oder das Gesamtergebnis negativ ist, wobei insbesondere die Fehlerreaktion wenigstens eine der folgenden Maßnahmen aufweist: a) Resetieren, also Zurücksetzen, der Recheneinrichtung und/oder Resetieren der Recheneinrichtung und des Kryptografiemoduls, b) Senden einer Unterbrechungsanforderung an die Recheneinrichtung (ggf. kann hierzu eine gesonderte Datenverbindung zur Übertragung der Unterbrechungsanforderung an die Recheneinrichtung vorgesehen sein), c) Sperren eines Zugriffs der Recheneinrichtung auf in dem Kryptografiemodul gespeicherte bzw. durch das Kryptografiemodul bereitstellbare kryptografische Schlüssel und/oder sonstige erste Daten, d) Verhindern der Ausführung eines Bootloaders der Recheneinrichtung, insbesondere durch Resetierthalten, also Halten in einem Rücksetzzustand, der Recheneinrichtung, e) Bereitstellen des Ergebnisses und/oder Gesamtergebnisses für die Recheneinrichtung und/oder Senden des Ergebnisses und/oder Gesamtergebnisses an die Recheneinrichtung.

Bei weiteren bevorzugten Ausführungsformen ist vorgesehen, dass das Kryptografiemodul dazu ausgebildet ist, im Rahmen der Überprüfung festzustellen, ob ein Inhalt des wenigstens einen Speicherbereichs einem vorgebbaren Speicherinhalt entspricht.

Bei weiteren bevorzugten Ausführungsformen ist vorgesehen, dass der wenigstens eine Speicherbereich wenigstens ein zur Ausführung auf der Recheneinrichtung vorgesehenes Computerprogramm, insbesondere einen Bootloader für die Recheneinrichtung, aufweist.

Bei weiteren bevorzugten Ausführungsformen ist vorgesehen, dass das Kryptografiemodul dazu ausgebildet ist, der Recheneinrichtung erste Daten, insbesondere kryptografische Schlüssel, bereitzustellen, wobei insbesondere das Kryptografiemodul dazu ausgebildet ist, der Recheneinrichtung in Abhängigkeit der Überprüfung die ersten Daten nur teilweise oder gar nicht zur Verfügung zu stellen.

Weitere bevorzugte Ausführungsformen beziehen sich auf ein Verfahren zum Betreiben eines Kryptografiemoduls, insbesondere für eine Recheneinrichtung, wobei das Kryptografiemodul wenigstens einen Speicherbereich einer Speichereinrichtung, auf die die Recheneinrichtung zugreifen kann, überprüft, wodurch ein Ergebnis der Überprüfung erhalten wird, und das Ergebnis zumindest zeitweise speichert.

Bei weiteren bevorzugten Ausführungsformen ist vorgesehen, dass das Kryptografiemodul mehrere Speicherbereiche der Speichereinrichtung überprüft, wobei insbesondere das Kryptografiemodul die mehreren Speicherbereiche der Speichereinrichtung periodisch überprüft, wobei insbesondere das Kryptografiemodul den wenigstens einen Speicherbereich zu wenigstens einem zufällig oder pseudozufällig gewählten Zeitpunkt überprüft, und/oder b) die mehreren Speicherbereiche zumindest zeitweise in einer zufälligen oder pseudozufälligen Reihenfolge überprüft, wobei insbesondere das Kryptografiemodul das Ergebnis der Überprüfung zumindest zeitweise flüchtig und/oder nichtflüchtig speichert.

Weitere vorteilhafte Ausführungsformen sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Figur 1: schematisch ein vereinfachtes Blockdiagramm eines Kryptografiemoduls gemäß einer Ausführungsform,
- Figur 2: schematisch ein vereinfachtes Blockdiagramm eines Kryptografiemoduls gemäß einer weiteren Ausführungsform,
- Figur 3: schematisch ein vereinfachtes Flussdiagramm eines Verfahrens gemäß einer Ausführungsform,
- Figur 4: schematisch ein vereinfachtes Flussdiagramm eines Verfahrens gemäß einer weiteren Ausführungsform,
- Figur 5: schematisch ein vereinfachtes Blockdiagramm eines Kryptografiemoduls gemäß einer weiteren Ausführungsform, und
- Figur 6: schematisch eine Datenstruktur gemäß einer Ausführungsform.

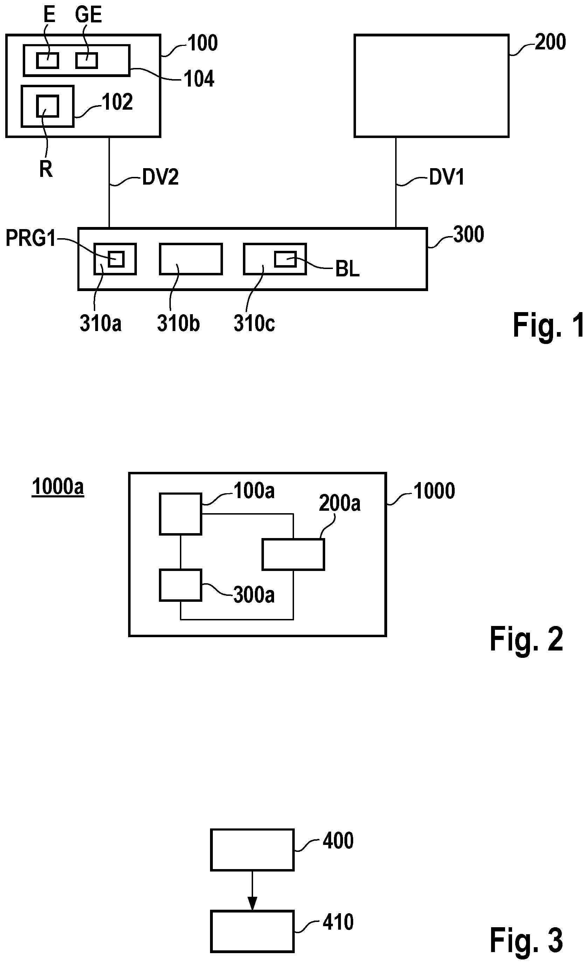

Figur 1 zeigt schematisch ein vereinfachtes Blockdiagramm eines Kryptografiemoduls 100 gemäß einer Ausführungsform. Das Kryptografiemodul 100 kann zur Überwachung wenigstens einer Recheneinrichtung 200, insbesondere zur Überwachung einer der Recheneinrichtung 200 zugeordneten Speichereinrichtung 300, und/oder zur zumindest zeitweisen Steuerung eines Betriebs der wenigstens einen Recheneinrichtung 200 genutzt werden.

Bei der Recheneinrichtung 200 handelt es sich z.B. um einen Mikrocontroller oder Mikroprozessor. Die Recheneinrichtung 200 kann Computerprogramme ausführen, die bei bevorzugten Ausführungsformen zumindest zeitweise in der Speichereinrichtung 300 (z.B. Arbeitsspeicher (RAM) und/oder Flash-EEPROM und/oder sonstiger, insbesondere (wieder-)beschreibbarer, Speicher) gespeichert sind. Beispielhaft weist die Speichereinrichtung 300 vorliegend drei Speicherbereiche 310a, 310b, 310c auf, und in dem ersten Speicherbereich 310a ist vorliegend ein erstes Computerprogramm PRG1 für die Recheneinrichtung 200 gespeichert. Die Recheneinrichtung 200 kann über die erste Datenverbindung DV1 zumindest lesend auf die Speichereinrichtung 300 zugreifen, um das erste Computerprogramm PRG1 zu laden. Generell können in jedem Speicherbereich 310a, 310b, 310c ein oder mehrere Computerprogramme gespeichert sein, die die Recheneinrichtung 200 über die erste Datenverbindung DV1 laden und dann ggf. ausführen kann, beispielsweise auch ein Bootloader BL für die Recheneinrichtung 200, also ein Computerprogramm, welches nach einer Initialisierung der Recheneinrichtung 200 als erstes zuerst ausgeführt wird. Der Bootloader BL kann, sobald er ausgeführt wird, dann beispielsweise das nachfolgende Laden und/oder Ausführen wenigstens eines weiteren Computerprogramms PRG1 durch die Recheneinrichtung 200 steuern.

Das Kryptografiemodul 100 ist dazu ausgebildet ist, wenigstens einen Speicherbereich 310a, 310b, 310c der Speichereinrichtung 300, auf die die Recheneinrichtung 200 zugreifen kann, zu überprüfen vgl. Schritt 400 des vereinfachten Flussdiagramms aus Fig. 3, wodurch ein Ergebnis der Überprüfung erhalten wird. Nach der Überprüfung 400 speichert das Kryptografiemodul 100 (Fig. 1) das Ergebnis der Überprüfung 400 zumindest zeitweise, vgl. Schritt 410 (Fig. 3). Dadurch ist vorteilhaft die Möglichkeit gegeben, einen Inhalt des wenigstens einen Speicherbereichs 310a beispielsweise auf Abweichungen gegenüber einem vorgebbaren Inhalt hin zu überprüfen. Hierdurch kann vorteilhaft beispielsweise die Ausführung von unsicheren bzw. durch einen Angreifer kompromittierten Computerprogrammen PRG1 durch die Recheneinrichtung 200 verhindert werden.

Bei bevorzugten Ausführungsformen erfolgt die Überprüfung seitens des Kryptografiemoduls 100 i.w. unabhängig von einem Betrieb der Recheneinrichtung 200, so dass der Betrieb der Recheneinrichtung 200 durch die Überprüfung nicht unterbrochen wird und umgekehrt.

Bei weiteren bevorzugten Ausführungsformen kann die Speichereinrichtung 300 extern zu dem Kryptografiemodul 100 und der Recheneinrichtung 200 angeordnet sein, wie dies schematisch in Figur 1 dargestellt ist. Ein Zugriff des Kryptografiemoduls 100 auf die Speichereinrichtung 300 erfolgt dabei über eine zweite Datenverbindung DV2, die bevorzugt getrennt ist von der ersten Datenverbindung DV1. Bei weiteren Ausführungsformen können die Datenverbindungen DV1, DV2 jedoch auch mittels eines gemeinsamen Bussystems realisiert sein.

Bei weiteren bevorzugten Ausführungsformen kann die Speichereinrichtung 300 auch in die Recheneinrichtung 200 integriert sein (nicht gezeigt). Bei noch weiteren bevorzugten Ausführungsformen, vgl. Fig. 2, kann vorteilhaft auch ein Ein-chip-System (englisch: system-on-a-chip, SoC) 1000 vorgesehen sein, das die Recheneinrichtung 200a, die Speichereinrichtung 300a und wenigstens ein Kryptografiemodul 100a gemäß den Ausführungsformen aufweist. In diesem Fall sind die Recheneinrichtung 200a, die Speichereinrichtung 300a und das wenigstens eine Kryptografiemodul 100a somit auf einem gemeinsamen Halbleitersubstrat 1000a angeordnet, wodurch sich eine besonders klein bauende Konfiguration ergibt.

Bei weiteren bevorzugten Ausführungsformen ist vorgesehen, dass das Kryptografiemodul 100, 100a dazu ausgebildet ist, mehrere Speicherbereiche 310a, 310b, 310c der Speichereinrichtung 300 zu überprüfen, wobei insbesondere das Kryptografiemodul 100, 100a die mehreren Speicherbereiche 310a, 310b, 310c der Speichereinrichtung 300 periodisch überprüft. Dadurch können vorteilhaft mehrere Speicherbereiche bzw. in den Speicherbereichen gespeicherte Computerprogramme PRG1, BL z.B. für die Recheneinrichtung 200 überprüft werden, wobei durch die periodische Überprüfung eine weiter gesteigerte Sicherheit gegen Manipulationen und/oder zufällig eintretende Veränderung des Inhalts des bzw. der Speicherbereiche gegeben ist.

Bei weiteren bevorzugten Ausführungsformen ist vorgesehen, dass das Kryptografiemodul 100 (Fig. 1), 100a dazu ausgebildet ist, a) den wenigstens einen Speicherbereich 310a, 310b, 310c (Fig. 1) zu wenigstens einem zufällig oder pseudozufällig gewählten Zeitpunkt zu überprüfen, und/oder b) die mehreren Speicherbereiche 310a, 310b, 310c zumindest zeitweise in einer zufälligen oder pseudozufälligen Reihenfolge zu überprüfen. D.h., bei weiteren Ausführungsformen kann während einer ersten Betriebsphase z.B. eine zufällige oder pseudozufällige Reihenfolge für die Überprüfung verwendet werden, und während einer zweiten Betriebsphase kann auch eine andersartige als die für die erste Betriebsphase genannte zufällige oder pseudozufällige Reihenfolge gewählt werden, beispielsweise eine determinierte Reihenfolge, z.B. abhängig von der Lage der Speicherbereiche 310a, 310b, 310c in einem Adressraum der Speichereinrichtung 300.

Bei weiteren bevorzugten Ausführungsformen ist vorgesehen, dass das Kryptografiemodul 100, 100a dazu ausgebildet ist, das Ergebnis der Überprüfung 400 (Fig. 3) zumindest zeitweise flüchtig und/oder nichtflüchtig (z.B. in einem Flash-EEPROM Speicher) zu speichern, vgl. Schritt 410 aus Fig. 3.

Bei weiteren bevorzugten Ausführungsformen ist vorgesehen, dass das Ergebnis der Überprüfung eines Speicherbereichs wenigstens einen Wahrheitswert umfasst, der das Ergebnis der Überprüfung charakterisiert, z.B. bei negativer Überprüfung den Wert "TRUE" ("wahr").

Bei weiteren bevorzugten Ausführungsformen ist vorgesehen, dass mehrere von jeweilig überprüften Speicherbereichen der Speichereinrichtung 300 als Ergebnis zugeordnete Wahrheitswerte einer ODER-Verknüpfung unterzogen werden, um ein Gesamtergebnis zu ermitteln, wobei insbesondere das Gesamtergebnis charakterisiert, ob wenigstens ein Ergebnis der mehreren überprüften Speicherbereiche der Speichereinrichtung negativ ist.

Bei weiteren bevorzugten Ausführungsformen ist vorgesehen, dass das Kryptografiemodul 100, 100a dazu ausgebildet ist, das Gesamtergebnis zumindest zeitweise flüchtig und/oder nichtflüchtig zu speichern.

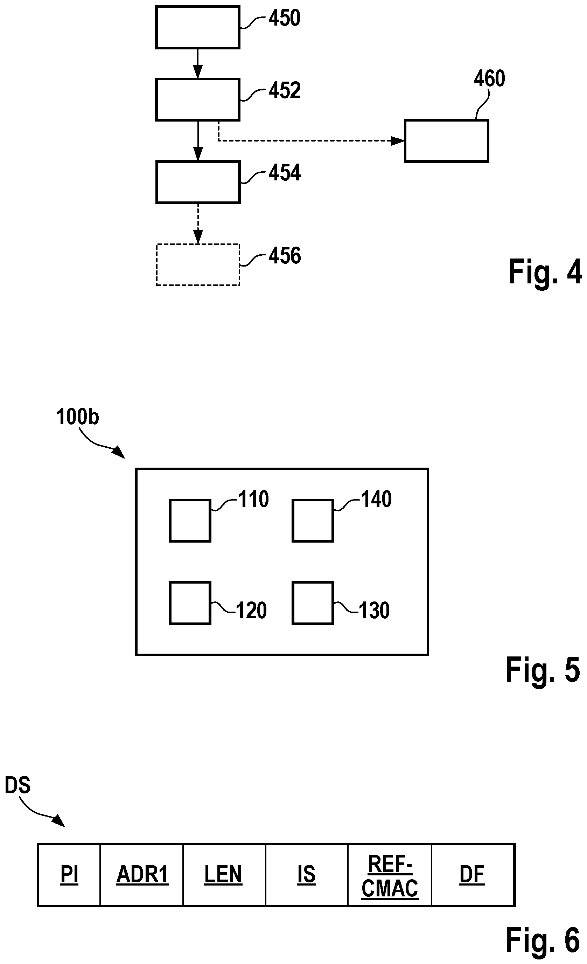

Figur 4 zeigt beispielhaft ein vereinfachtes Flussdiagramm gemäß einer weiteren Ausführungsform. In Schritt 450 überprüft das Kryptografiemodul 100, 100a gemäß einer (pseudo)zufällig gewählten Reihenfolge zunächst den Speicherbereich 310c (Fig. 1) der Speichereinrichtung 300. Optional speichert das Kryptografiemodul 100, 100a in Schritt 450 nach der Überprüfung des Speicherbereichs 310c auch gleich das zugehörige Ergebnis. In Schritt 452 überprüft das Kryptografiemodul 100, 100a den Speicherbereich 310a (Fig. 1) der Speichereinrichtung 300. Optional speichert das Kryptografiemodul 100, 100a in Schritt 452 nach der Überprüfung des Speicherbereichs 310a auch gleich das zugehörige Ergebnis. In Schritt 454 überprüft das Kryptografiemodul 100, 100a den Speicherbereich 310b (Fig. 1) der Speichereinrichtung 300. Optional speichert das Kryptografiemodul 100, 100a in Schritt 454 nach der Überprüfung des Speicherbereichs 310b auch gleich das zugehörige Ergebnis. In dem ebenfalls optionalen Schritt 456 ermittelt das Kryptografiemodul 100, 100a ein Gesamtergebnis bezüglich der Schritte 450, 452, 454 der Überprüfungen der einzelnen Speicherbereiche 310a, 310b, 310c, das ebenfalls optional zumindest zeitweise durch das Kryptografiemodul 100, 100a gespeichert werden kann. Bevorzugt werden bei weiteren Ausführungsformen die Schritte 450, 452, 454 (ggf. auch in abweichender Reihenfolge) zumindest teilweise wiederholt, insbesondere periodisch wiederholt, so dass wenigstens manche, vorzugsweise alle, Speicherbereiche 310a, 310b, 310c der Speichereinrichtung 300, mehrfach überprüft werden. Z.B. kann der vorstehend beispielhaft unter Bezugnahme auf Fig. 4 beschriebene Ablauf wiederholt werden, sobald der Schritt 454 bzw. der optionale Schritt 456 beendet worden ist.

Beispielsweise kann bei weiteren bevorzugten Ausführungsformen eine Fehlerrekation 460 eingeleitet werden, sobald ein Überprüfungsergebnis (eines einzelnen Speicherbereichs, siehe vorliegend z.B. Schritt 452) und/oder das Gesamtergebnis negativ ausgefallen ist. Somit ist bei weiteren bevorzugten Ausführungsformen vorgesehen, dass das Kryptografiemodul 100, 100a dazu ausgebildet ist, eine Fehlerreaktion 460 einzuleiten, wenn wenigstens ein Ergebnis und/oder das Gesamtergebnis negativ ist, wobei insbesondere die Fehlerreaktion wenigstens eine der folgenden Maßnahmen aufweist: a) Resetieren, also Zurücksetzen, der Recheneinrichtung 200 und/oder Resetieren der Recheneinrichtung 200 und des Kryptografiemoduls 100, b) Senden einer Unterbrechungsanforderung an die Recheneinrichtung 200, c) Sperren eines Zugriffs der Recheneinrichtung 200 auf in dem Kryptografiemodul 100 gespeicherte bzw. durch das Kryptografiemodul bereitstellbare kryptografische Schlüssel und/oder sonstige erste Daten, d) Verhindern der Ausführung eines Bootloaders BL (Fig. 1) der Recheneinrichtung 200, insbesondere durch Resetierthalten, also Halten in einem Rücksetzzustand, der Recheneinrichtung 200, e) Bereitstellen des Ergebnisses und/oder Gesamtergebnisses für die Recheneinrichtung 200 und/oder Senden des Ergebnisses und/oder Gesamtergebnisses an die Recheneinrichtung 200, f) Starten eines Bootloaders BL der Recheneinrichtung 200 (insbesondere, wenn dieser Bootloader BL zuvor erfolgreich als nicht verändert bzw. manipuliert geprüft worden ist).

Bei weiteren bevorzugten Ausführungsformen ist vorgesehen, dass das Kryptografiemodul 100, 100a dazu ausgebildet ist, die Überprüfung 400 (Fig. 3) bzw. 450, 452, 454 (Fig. 4) des wenigstens einen Speicherbereichs 310a, 310b, 310c unter Verwendung eines schlüsselbasierten Nachrichtenauthentifizierungscodes, CMAC, auszuführen. Dadurch ist eine besonders effiziente Überprüfung ermöglicht. Eine Internetpublikation, die sich auf eine beispielhafte Ausgestaltung des CMAC-Verfahrens bezieht, ist beispielsweise unter https://doi.org/10.6028%2Fnist.sp.800-38b abrufbar.

Bei weiteren bevorzugten Ausführungsformen ist vorgesehen, dass das Kryptografiemodul 100, 100a eine, vorzugsweise in das Kryptografiemodul 100 integrierte, Speichereinheit 102 (Fig. 1) zur Speicherung wenigstens eines Referenzwerts R und/oder eines Referenzlayouts für den wenigstens einen Speicherbereich 310a, 310b, 310c aufweist. Bei bevorzugten Ausführungsformen kann der Referenzwert R beispielsweise einen CMAC-Wert für einen vorgebbaren Speicherinhalt repräsentieren, der beispielsweise mit einem CMAC-Wert vergleichbar ist, der bei der Überprüfung des wenigstens einen Speicherbereichs durch das Kryptografiemodul ermittelt worden ist. Sofern der ermittelte CMAC-Wert von dem Referenzwert abweicht, kann auf eine unzulässige Veränderung des Speicherinhalts des überprüften Speicherbereichs geschlossen werden.

Weiter bevorzugt kann das Kryptografiemodul 100 auch einen Ergebnisspeicher 104 zur zumindest zeitweisen Speicherung des Ergebnis E (Fig. 1) wenigstens einer Überprüfung (Schritt 400 aus Fig. 3 bzw. Schritte 450, 452, 454 aus Fig. 4) und/oder des Gesamtergebnisses GE (Fig. 1) aufweisen.

Bei weiteren bevorzugten Ausführungsformen ist vorgesehen, dass das Kryptografiemodul 100, 100a dazu ausgebildet ist, die Überprüfung 400 in Abhängigkeit des Referenzwerts R auszuführen. Bei diesen Ausführungsformen umfasst die Überprüfung beispielsweise die Bildung eines CMAC-Werts in Abhängigkeit des Speicherinhalts des wenigstens einen Speicherbereichs und einen Vergleich des so gebildeten CMAC-Werts mit dem Referenzwert, wie er beispielsweise in der Speichereinheit des Kryptografiemoduls hinterlegt ist.

Beispielsweise kann das Kryptografiemodul 100 das erste Computerprogramm PRG1 oder den gesamten Inhalt des Speicherbereichs 310a der Speichereinrichtung 300 laden (auch blockweise möglich, dann vorzugsweise auch unter blockweiser CMAC-Bildung), z.B. über die zweite Datenverbindung DV2. Sodann bildet das Kryptografiemodul 100 einen CMAC-Wert über das geladene erste Computerprogramm PRG1 oder den gesamten Inhalt des Speicherbereichs 310a der Speichereinrichtung 300. Dieser CMAC-Wert kann dann mit dem entsprechenden Referenzwert für das erste Computerprogramm PRG1 oder den gesamten Inhalt des Speicherbereichs 310a der Speichereinrichtung 300 verglichen werden, der beispielsweise vorab, z.B. bei der Fertigung des Kryptografiemoduls 100 in einer abgesicherten Umgebung erzeugt und bevorzugt so in dem Kryptografiemodul 100 gespeichert wird, dass er nur für das Kryptografiemodul 100 zugänglich ist.

Bei weiteren bevorzugten Ausführungsformen ist vorgesehen, dass das Kryptografiemodul 100, 100a dazu ausgebildet ist, im Rahmen der Überprüfung festzustellen, ob ein Inhalt des wenigstens einen Speicherbereichs einem vorgebbaren Speicherinhalt entspricht. Dies entspricht z.B. dem Schritt 400. Neben dem bevorzugt verwendeten CMAC-Verfahren können bei weiteren Ausführungsformen hierzu auch andere Verfahren zum Vergleich von Daten verwendet werden. Ein daraus erhaltenes Ergebnis E kann zumindest zeitweise in dem Ergebnisspeicher 104 gespeichert werden.

Bei weiteren bevorzugten Ausführungsformen ist vorgesehen, dass der wenigstens eine Speicherbereich 310a, 310b, 310c wenigstens ein zur Ausführung auf der Recheneinrichtung vorgesehenes Computerprogramm PRG1, ggf. auch einen Bootloader BL für die Recheneinrichtung 200, aufweist.

Bei weiteren bevorzugten Ausführungsformen ist vorgesehen, dass das Kryptografiemodul 100, 100a dazu ausgebildet ist, der Recheneinrichtung erste Daten, insbesondere kryptografische Schlüssel, bereitzustellen, wobei insbesondere das Kryptografiemodul 100, 100a dazu ausgebildet ist, der Recheneinrichtung 200 in Abhängigkeit der Überprüfung 400 die ersten Daten nur teilweise oder gar nicht zur Verfügung zu stellen.

Figur 5 zeigt schematisch ein vereinfachtes Blockdiagramm eines Kryptografiemoduls 100b gemäß einer weiteren Ausführungsform. Das Kryptografiemodul 100b weist einen Rechenkern bzw. Prozessor 110 auf, einen Arbeitsspeicher 120, einen nichtflüchtigen Speicher 130 (beispielsweise Flash-EEPROM), und optional eine Kryptografieeinheit 140, die zur Ausführung von ein oder mehreren kryptografischen Algorithmen oder wenigstens Teilen hiervon ausgebildet ist. Beispielsweise kann die Kryptografieeinheit 140 dazu ausgebildet sein, die vorstehend beschriebene Ermittlung von CMAC-Werten für die Überprüfung 400 (Fig. 3) auszuführen. Die dabei erhaltenen Ergebnisse E bzw. das Gesamtergebnis GE (Fig. 1) kann das Kryptografiemodul 100, 100a, 100b z.B. in dem Speicher 130 (Fig. 5) speichern. Beispielsweise kann ein vorgebbarer Adressbereich des Speichers 130 zur Realisierung des Ergebnisspeichers verwendet werden. Beispielsweise kann auch die Funktionalität der Speichereinheit 102 gemäß Fig. 1 durch den Speicher 130 gemäß Fig. 5 realisiert werden.

Bei weiteren bevorzugten Ausführungsformen ist vorgesehen, dass das Kryptografiemodul 100, 100a, 100b erhaltene Ergebnisse E der Überprüfung 400 bzw. das Gesamtergebnis GE in einem Speicher 104 (Fig. 1) ablegt, auf den die Recheneinrichtung 200 lesend (und bevorzugt nur lesend) zugreifen kann. Auf diese Weise kann die Recheneinrichtung 200 unter Steuerung eines Computerprogramms die mittels des Kryptografiemoduls 100, 100a, 100b z.B. im wesentlichen unsynchronisiert zu einem Betrieb der Recheneinrichtung 200 ermittelten Ergebnisse E bzw. das Gesamtergebnis GE lesen und ggf. selbst eine Reaktion ausführen, z.B. Fehlerreaktion einleiten.

Figur 6 zeigt schematisch eine Datenstruktur DS gemäß weiterer bevorzugter Ausführungsformen. Die Datenstruktur DS kann beispielsweise dazu verwendet werden, CMAC-Referenzwerte bzw. ein Referenzlayout oder dergleichen für das Kryptografiemodul 100, beispielsweise in der Speichereinheit 102 des Kryptografiemoduls 100, zu speichern. Bei bevorzugten Ausführungsformen weist die Datenstruktur DS einen Primärindex PI auf, der eine eindeutige Identifikation bereitstellt. Sofern beispielsweise mehrere Datenstrukturen bzw. Datensätze mit der Datenstruktur DS vorhanden sind, können diese unter Nutzung entsprechender Werte für den Primärindex PI voneinander unterschieden werden. Es ist vorstellbar, dass bei mehreren durch ein Kryptografiemodul 100 verwalteten Datenstrukturen bzw. die abgebildete Datenstruktur DS aufweisenden Datensätzen für jeden Datensatz ein eindeutiger Wert für den genannten Primärindex PI vergeben wird.

Weiter bevorzugt kann die Datenstruktur DS eine Startadresse ADR1 aufweisen, die beispielsweise eine Speicheradresse, insbesondere Startadresse, eines gegebenenfalls zu überprüfenden Speicherbereichs 310a, 310b, 310c in der Speichereinrichtung 300 (Figur 1) definiert. Beispielsweise kann dies eine Startadresse in der Speichereinrichtung 300 sein, an der ein Computerprogramm wie beispielsweise der vorstehend beschriebene Bootloader BL oder das erste Computerprogramm PRG1 abgelegt ist.

Weiter bevorzugt weist die Datenstruktur DS eine Längenangabe LEN auf, die die Länge des betreffenden Speicherbereichs 310a, 310b, 310c angibt. Weiter bevorzugt weist die Datenstruktur DS ein Statusfeld IS auf, das einen Integritätsstatus des aktuellen Datensatzes angibt (beispielsweise "überprüft" oder "fehlerhaft" oder dergleichen, was zum Beispiel in Abhängigkeit von der Überprüfung gemäß Schritt 400 aus Figur 3 ermittelbar ist). Demnach kann das Ergebnis E einer Überprüfung 400 eines einzelnen Computerprogramms BL, PRG1 bzw. eines Speicherbereichs 310a, 310b, 310c vorteilhaft in Form des Statusfelds IS gespeichert werden.

Besonders bevorzugt weist die Datenstruktur DS ferner ein Feld REF-CMAC zur Aufnahme eines CMAC-Referenzwerts auf, wie er beispielsweise zu einem Fertigungszeitpunkt für ein in der Speichereinrichtung 300 gespeichertes Computerprogramm, beispielsweise den Bootloader BL, ermittelt worden ist.

Dieser CMAC-Referenzwert kann fortan durch das Kryptografiemodul 100 zur Überprüfung der Echtheit beziehungsweise Unversehrtheit eines zu dem Zeitpunkt der Überprüfung in der Speichereinrichtung 300 bzw. dem betreffenden Speicherbereich 310 vorhandenen Computerprogramms genutzt werden.

Bei weiteren bevorzugten Ausführungsformen kann die Datenstruktur DS auch noch weitere Datenfelder DF enthalten, beispielsweise zur Aufnahme von Signaturadressen, Signaturtypen und Verweisen auf entsprechende root-Zertifikate und dergleichen, und zur zumindest zeitweisen Speicherung des z.B. in Form einer ODER-Verknüpfung aller (Einzel-)Ergebnisse erhaltenen Gesamtergebnis GE (Fig. 1).

Bei weiteren bevorzugten Ausführungsformen kann das Kryptografiemodul 100, 100a, 100b auch ein Protokoll bzw. Logfile über erfolgreiche und/oder nicht erfolgreiche Überprüfungen 400, 450, 452, 454 führen. Beispielsweise kann das Kryptografiemodul 100, 100a, 100b einen Fehlereintrag speichern, wenn eine Überprüfung eines Speicherbereichs 310a bzw. einer darin enthaltenen Software fehlgeschlagen ist (z.B. erkannt an einer Abweichung des ermittelten CMAC-Werts von dem Referenz-CMAC-Wert). Das Logfile kann bevorzugt zusätzlich zur zumindest zeitweisen Speicherung der Ergebnisse bzw. des Gesamtergebnisses genutzt werden, oder auch zum Persistieren (also zum nichtflüchtigen Speichern) dieser Werte.

Das Prinzip gemäß den Ausführungsformen weist die weiteren nachstehend genannten Vorteile auf: a) es können effizient Manipulationen (wie auch fehlerbedingte Änderungen) am Inhalt der Speichereinrichtung 300, beispielsweise Manipulationen von darin gespeicherten Computerprogrammen wie beispielsweise einem Bootloader oder dergleichen, während der Laufzeit des Kryptografiemoduls 100 und der Recheneinrichtung 200 erkannt werden ("runtime manipulation detection", RTMD), ohne dass der Betrieb der Recheneinrichtung 200 beeinträchtigt wird, b) das sichere Booten (also Starten) einer Software auf der Recheneinrichtung 200, beispielsweise einer Anwendungssoftware, ist sichergestellt ("trusted boot", z.B. durch frühzeitige Prüfung des Bootloaders BL), c) auch nachträglich in die Speichereinrichtung 300 gespeicherte Computerprogramme bzw. sonstige Daten können vorteilhaft nach dem Prinzip gemäß den Ausführungsformen überprüft werden ("secure flashing"), d) ein Zugriff auf gegebenenfalls durch das Kryptografiemodul bereitgestellte kryptografische Schlüssel und andere sensible Informationen ist in Abhängigkeit der Überprüfung gemäß den Ausführungsformen steuerbar ("security access"), e) eine Bootreihenfolge (Reihenfolge der Abarbeitung von Computerprogrammen bei Start der Recheneinheit 200) kann beliebig gewählt werden, ohne dass die Sicherheit beeinträchtigt wird, f) durch den Einsatz des Kryptografiemoduls 100, gegebenenfalls mit einer dedizierten Kryptografieeinheit 140, können leistungsfähige und sichere kryptografische Funktionen bereitgestellt werden, beispielsweise CMAC-Bildung, z.B. basierend auf 128 Bit AES (Advanced Encryption Standard), g) durch die Vorsehung von Referenzlayouts z.B. in Form der Datenstruktur DS nach Fig. 7 kann der Betrieb des Kryptografiemoduls 100 flexibel an unterschiedliche Speicherlayouts und sonstige Konfigurationen der Recheneinrichtung 200 angepasst werden.

## Patentansprüche

1. Kryptografiemodul (100; 100a; 100b), für eine Recheneinrichtung (200; 200a), wobei das Kryptografiemodul (100; 100a; 100b) dazu ausgebildet ist, wenigstens einen Speicherbereich (310a, 31 0b, 31 0c) einer Speichereinrichtung (300), auf die die Recheneinrichtung (200; 200a) zugreifen kann, zu überprüfen (400; 450, 452, 454), wodurch ein Ergebnis der Überprüfung erhalten wird, und das Ergebnis zumindest zeitweise zu speichern (410; 450, 452, 454), wobei das Kryptografiemodul (100; 100a; 100b) dazu ausgebildet ist, a) den wenigstens einen Speicherbereich (310a, 310b, 310c) zu wenigstens einem zufällig oder pseudozufällig gewählten Zeitpunkt zu überprüfen, und/oder b) mehrere Speicherbereiche (310a, 310b, 310c) zumindest zeitweise in einer zufälligen oder pseudozufälligen Reihenfolge zu überprüfen.

2. Kryptografiemodul (100; 100a; 100b) nach wenigstens einem der vorstehenden Ansprüche, wobei das Kryptografiemodul (100; 100a; 100b) dazu ausgebildet ist, das Ergebnis der Überprüfung zumindest zeitweise flüchtig und/oder nichtflüchtig zu speichern.

3. Kryptografiemodul (100; 100a; 100b) nach wenigstens einem der vorstehenden Ansprüche, wobei das Ergebnis der Überprüfung eines Speicherbereichs (310a) wenigstens einen Wahrheitswert umfasst, der das Ergebnis der Überprüfung charakterisiert.

4. Kryptografiemodul (100; 100a; 100b) nach Anspruch 3, wobei mehrere von jeweilig überprüften Speicherbereichen (310a, 310b, 310c) der Speichereinrichtung (300) als Ergebnis zugeordnete Wahrheitswerte einer ODER-Verknüpfung unterzogen werden, um ein Gesamtergebnis zu ermitteln, wobei insbesondere das Gesamtergebnis charakterisiert, ob wenigstens ein Ergebnis der mehreren überprüften Speicherbereiche (310a, 310b, 310c) der Speichereinrichtung (300) negativ ist.

5. Kryptografiemodul (100; 100a; 100b) nach Anspruch 4, wobei das Kryptografiemodul (100; 100a; 100b) dazu ausgebildet ist, das Gesamtergebnis zumindest zeitweise flüchtig und/oder nichtflüchtig zu speichern.

6. Kryptografiemodul (100; 100a; 100b) nach wenigstens einem der vorstehenden Ansprüche, wobei das Kryptografiemodul (100; 100a; 100b) dazu ausgebildet ist, die Überprüfung (400; 450, 452, 454) des wenigstens einen Speicherbereichs (310a, 310b, 310c) unter Verwendung eines schlüsselbasierten Nachrichtenauthentifizierungscodes, CMAC, auszuführen.

7. Kryptografiemodul (100; 100a; 100b) nach wenigstens einem der vorstehenden Ansprüche, wobei das Kryptografiemodul (100; 100a; 100b) eine, vorzugsweise in das Kryptografiemodul (100; 100a; 100b) integrierte, Speichereinheit (102) zur Speicherung wenigstens eines Referenzwerts (R) und/oder eines Referenzlayouts für den wenigstens einen Speicherbereich (310a, 310b, 310c) aufweist.

8. Kryptografiemodul (100; 100a; 100b) nach Anspruch 7, wobei das Kryptografiemodul (100; 100a; 100b) dazu ausgebildet ist, die Überprüfung (400; 450, 452, 454) in Abhängigkeit des Referenzwerts (R) auszuführen.

9. Kryptografiemodul (100; 100a; 100b) nach wenigstens einem der vorstehenden Ansprüche, wobei das Kryptografiemodul (100; 100a; 100b) dazu ausgebildet ist, eine Fehlerreaktion einzuleiten, wenn wenigstens ein Ergebnis und/oder das Gesamtergebnis negativ ist, wobei insbesondere die Fehlerreaktion wenigstens eine der folgenden Maßnahmen aufweist: a) Resetieren, also Zurücksetzen, der Recheneinrichtung (200; 200a) und/oder Resetieren der Recheneinrichtung (200; 200a) und des Kryptografiemoduls (100; 100a), b) Senden einer Unterbrechungsanforderung an die Recheneinrichtung (200; 200a), c) Sperren eines Zugriffs der Recheneinrichtung (200; 200a) auf in dem Kryptografiemodul (100; 100a) gespeicherte bzw. durch das Kryptografiemodul (100; 100a) bereitstellbare kryptografische Schlüssel und/oder sonstige erste Daten, d) Verhindern der Ausführung eines Bootloaders der Recheneinrichtung (200; 200a), insbesondere durch Resetierthalten, also Halten in einem Rücksetzzustand, der Recheneinrichtung (200; 200a), e) Bereitstellen des Ergebnisses und/oder Gesamtergebnisses für die Recheneinrichtung (200; 200a) und/oder Senden des Ergebnisses und/oder Gesamtergebnisses an die Recheneinrichtung (200; 200a).

10. Kryptografiemodul (100; 100a; 100b) nach wenigstens einem der vorstehenden Ansprüche, wobei das Kryptografiemodul (100; 100a; 100b) dazu ausgebildet ist, im Rahmen der Überprüfung (400; 450, 452, 454) festzustellen, ob ein Inhalt des wenigstens einen Speicherbereichs (310a, 310b, 310c) einem vorgebbaren Speicherinhalt entspricht.

11. Kryptografiemodul (100; 100a; 100b) nach wenigstens einem der vorstehenden Ansprüche, wobei der wenigstens eine Speicherbereich (310a, 310b, 310c) wenigstens ein zur Ausführung auf der Recheneinrichtung (200; 200a) vorgesehenes Computerprogramm (PRG1, BL), insbesondere einen Bootloader (BL) für die Recheneinrichtung (200; 200a), aufweist.

12. Kryptografiemodul (100; 100a; 100b) nach wenigstens einem der vorstehenden Ansprüche, wobei das Kryptografiemodul (100; 100a; 100b) dazu ausgebildet ist, der Recheneinrichtung (200; 200a) erste Daten, insbesondere kryptografische Schlüssel, bereitzustellen, wobei insbesondere das Kryptografiemodul (100; 100a; 100b) dazu ausgebildet ist, der Recheneinrichtung (200; 200a) in Abhängigkeit der Überprüfung (400; 450, 452, 454) die ersten Daten nur teilweise oder gar nicht zur Verfügung zu stellen.

13. Verfahren zum Betreiben eines Kryptografiemoduls (100; 100a; 100b), insbesondere für eine Recheneinrichtung (200; 200a), wobei das Kryptografiemodul (100; 100a; 100b) wenigstens einen Speicherbereich (310a, 310b, 310c) einer Speichereinrichtung (300), auf die die Recheneinrichtung (200; 200a) zugreifen kann, überprüft (400; 450, 452, 454), wodurch ein Ergebnis der Überprüfung erhalten wird, und das Ergebnis zumindest zeitweise speichert (410; 450, 452, 454), wobei das Kryptografiemodul (100; 100a; 100b) mehrere Speicherbereiche (310a, 310b, 310c) der Speichereinrichtung (300) überprüft (450, 452, 454), wobei das Kryptografiemodul (100; 100a; 100b) den wenigstens einen Speicherbereich (310a, 310b, 310c) zu wenigstens einem zufällig oder pseudozufällig gewählten Zeitpunkt überprüft, und/oder b) die mehreren Speicherbereiche (310a, 310b, 310c) zumindest zeitweise in einer zufälligen oder pseudozufälligen Reihenfolge überprüft, wobei insbesondere das Kryptografiemodul (100; 100a; 100b) das Ergebnis der Überprüfung zumindest zeitweise flüchtig und/oder nichtflüchtig speichert (450, 452, 454).
